Europäisches Patentamt

European Patent Office

Office européen des brevets

(19)

(11) Veröffentlichungsnummer: **0 021 347**
**A1**

## (12) EUROPÄISCHE PATENTANMELDUNG

(21) Anmeldenummer: 80103420.8

(22) Anmeldetag: 19.06.80

(51) Int. Cl.³: **F 16 H 15/10**
**// B60K17/08**

(30) Priorität: 21.06.79 DE 2925033

(43) Veröffentlichungstag der Anmeldung: 07.01.81
Patentblatt 81/1

(84) Benannte Vertragsstaaten: **CH FR GB IT LI SE**

(71) Anmelder: **Schimmel, Giesbert, Hiltruper Strasse 39,
D-4400 Münster-Wolbeck (DE)**

(72) Erfinder: **Schimmel, Giesbert, Hiltruper Strasse 39,
D-4400 Münster-Wolbeck (DE)**

(74) Vertreter: **Schulze Horn, Stefan et al, Patentanwälte
Dipl.-Ing. Stefan Schulze Horn M. SC. Dr. Helmut
Hoffmeister Goldstrasse 36, D-4400 Münster (DE)**

(54) **Reibradgetriebe und dessen Anwendung.**

(57)   Reibradgetriebe mit einem zur stufenlosen Änderung des Übersetzungsverhältnisses auf einer Scheibe radial verschiebbaren und aus einer zum Scheibenradius parallelen Achslage verschwenkbaren Reibrad, wobei die Scheibe und das Reibrad plan oder kegelig ausgebildet sein können, die Achse (1) des Reibrades (2) um einen Punkt außerhalb der im Mittelpunkt der Scheibe (3) errichteten Senkrechten verschwenkbar ist, das Reibrad (2) auf seiner Achse (1) frei verschiebbar ist und der Kraftfluß an der das Reibrad (2) tragenden Achse (1) in ihrem Schwenkpunkt über eine Gelenkverbindung (4) erfolgt.

## BEZEICHNUNG GEÄNDERT
### siehe Titelseite

Reibradgetriebe

Die Erfindung betrifft ein Reibradgetriebe mit einem zur stofenlosen Änderung des Übersetzungsverhältnisses auf einer Scheibe radial verschiebbaren und aus einer zum Scheibenradius parallelen Achslage verschwenkbaren Reibrad, wobei die Scheibe und das Reibrad plan oder kegelig ausgebildet sein können, und Anwendungen des Reibradgetriebes.

Es sind bereits stufenlose Reibradgetriebe bekannt, bei denen auf einer drehenden Reibscheibe ein Reibrad mit zur Drehachse des ersten Reibrades senkrecht stehender Achse läuft und Mittel vorgesehen sind, die es gestatten, das Reibrad in radialer Richtung gegenüber der Reibscheibe zu bewegen. Jede radiale Stellung des Reibrades gegenüber der Reibscheibe bedingt ein bestimmtes Übersetzungsverhältnis.

Der Nachteil dieser bekannten Reibradgetriebe besteht darin, daß die radiale Verschiebung des Reibrades gegenüber der Reibscheibe infolge der auftretenden Reibung stark kraftverzehrend und damit wärmeerzeugend ist.

Zur Vermeidung dieses Nachteils ist die Verschwenkbarkeit des Reibrades aus seiner mit dem Scheibenradius parallelen Achslage mit nachfolgender Wiedereinnahme der parallelen Achslage zur Änderung des Übersetzungsverhältnisses bereits vorgeschlagen worden (DE-GM 1 906 311). Bei diesem Vorschlag ist die Achse des Reibrades in einer Gabel gelagert, die sich an einem drehbaren Stift befindet, so daß die Gabel um ihre Achse mit der Folge verschwenkt werden kann, daß das Reibrad die tangentiale Anlage an den Drehkreis verläßt und sich hierdurch bei drehender Scheibe selbsttätig in einen gewünschten Abstand von der Drehachse der Scheibe unter erneuter Einnahme der zum Scheibenradius parallelen Achslage bewegt, wodurch eine Änderung des Übersetzungsverhältnisses eintritt. Da das Verschwenken des Reibrades eine nur geringe Kraft erfordert, ergibt sich der Vorteil,daß die Änderung des Übersetzungsverhältnisses leicht vorgenommen werden kann. Dieser bekannt gewordene Vorschlag eignet sich jedoch nicht zum Übertragen größerer Kräfte, da der die Gabel tragende Stift beim Lauf des Getriebes Biegebeanspruchungen unterworfen ist. Außerdem erleidet das Reibrad bei dieser Konstruktion infolge der beim Verschwenken zwischen dem Reibrad und der Scheibe auftretenden Kräfte einen recht hohen Verschleiß.

Es ist Aufgabe der Erfindung, diese Nachteile des Standes der Technik zu vermeiden und ein Reibradgetriebe der eingangs genannten Art zu schaffen, das einerseits zur Übertragung größerer Kräfte geeignet ist und andererseits einen besonders geringen Verschleiß des Reibrades gewährleistet.

Diese Aufgabe wird erfindungsgemäß dadurch gelöst, daß
- die Achse des Reibrades um einen Punkt außerhalb der im Mittelpunkt der Scheibe errichteten Senkrechten verschwenkbar ist,
- das Reibrad auf seiner Achse frei verschiebbar ist und
- der Kraftfluß an der das Reibrad tragenden Achse in ihrem Schwenkpunkt über eine Gelenkverbindung erfolgt.

Vorteilhaft ist bei festliegender Achse der Scheibe die Achse des Reibrades um einen Punkt außerhalb der Scheibe verschwenkbar.

Anstelle der Verschwenkung der das Reibrad tragenden Achse kann zur Änderung des Übersetzungsverhältnisses vorteilhaft auch eine Verschiebung der Scheibe in der Scheibenebene erfolgen.

Die das Reibrad tragende Achse ist vorteilhaft eine Profilwelle.

Die Kraftübertragung im Schwerpunkt der das Reibrad tragenden Achse wird vorteilhaft dadurch erreicht, daß der Kraftfluß an der verschwenkbaren Achse über ein Kegelradgetriebe erfolgt.

Anstelle der Kraftübertragung über ein Kegelradgetriebe kann vorteilhaft auf der verschwenkbaren Achse ein Stromgenerator angeordnet sein. Die Abführung des erzeugten Stroms kann dann über flexible Kabel erfolgen, so daß die Verschwenkung der Achse nicht behindert wird.

Vorteilhaft kann die Scheibe als Schwungrad ausgebildet sein. Das Reibradgetriebe kann dann vorteilhaft als Kraftfahrzeugantriebsgetriebe dienen, wobei das Schwungrad beim Bremsen Energie aufnimmt und beim Beschleunigen abgibt.

Eine weitere erfindungsgemäße Anwendung des Reibradgetriebes liegt darin, daß es als Leistungsmeßgerät dient, wobei das an der das Reibrad tragenden Achse auftretende Drehmoment als Maß für die übertragenen Drehmomente gemessen wird.

Wenn das Verhältnis des Radius des Kegelrades 8 zum Radius des Kegelrades 9 gleich dem Verhältnis des Abstandes der Achse 5 und der Achse des Kegelrades 8 zum Radius des Reibrades 2 ist, kann das Reibradgetriebe erfindungsgemäß zur Konstanthaltung des zu übertragenden Drehmomentes angewendet werden. Dies kann dadurch geschehen, daß das zu übertragende Drehmoment durch Einstellung einer am Ende der Welle 1 angreifenden Kraft eingestellt wird.

Bei Verwendung des Reibradgetriebes als Kraftfahrzeugantriebsgetriebe kann vorteilhaft die Fahrgeschwindigkeit unabhängig von der Drehzahl des Motors durch das Übersetzungsverhältnis des Reibradgetriebes geregelt werden. Hierdurch ist es möglich, den Antriebsmotor ständig mit optimaler Drehzahl laufen zu lassen.

Im folgenden werden Ausführungsbeispiele der Erfindung anhand der Zeichnung näher erläutert. Es zeigen:

Figur 1 eine schematische Darstellung eines erfindungsgemäßen Reibradgetriebes in Seitenansicht,

Figur 2 eine Draufsicht auf das Reibradgetriebe gemäß Figur 1 und

Figur 3 eine andere Ausführungsform des erfindungsgemäßen Reibradgetriebes.

Gemäß den Figuren besteht das Reibradgetriebe im wesentlichen aus einer mit einer Achse 5 versehenen Scheibe 3, einem zur Scheibe 5 senkrecht stehenden und auf seiner Achse 1 verschiebbaren Reibrad 2 und einem aus zwei Kegelrädern 8 und 9 bestehenden Kegelradgetriebes 4. Zur stufenlosen Änderung des Übersetzungsverhältnisses ist das Reibrad 2 aus einer zum Radius der Scheibe 3 parallelen Achslage verschwenkbar. Dies wird dadurch erreicht, daß die Achse 1 um eine im Mittelpunkt des

0021347

Kegelrades 8 errichtete Senkrechte verschwenkbar ist. An der dem Kegelradgetriebe 4 entgegengesetzten Ende der Achse 1 ist eine Führung 6 angedeutet. Diese Führung 6 steht im Belieben des Fachmannes und braucht nicht näher erläutert zu werden.

Die Wirkungsweise des Reibradgetriebes ist folgende: Bei einer Verschwenkung der als Profilwelle ausgebildeten Achse 1 verläßt das Reibrad 2 die tangentiale Anlage an den Drehkreis. Die Folge hiervon ist, daß das Reibrad 2 das Bestreben hat, seinen Abstand vom Mittelpunkt der Scheibe 3 zu verändern. Wenn das Reibrad 2 einen dem gewünschten Übersetzungsverhältnis entsprechenden Abstand vom Mittelpunkt der Scheibe 3 erreicht hat, wird die Achse 1 durch eine geeignete Vorrichtung in ihre Ausgangslage zurückgeschwenkt, so daß das Reibrad 2 die tangentiale Anlage an den Drehkreis wieder einnimmt.

Durch die zwischenzeitliche Verschwenkung der Achse 1 hat also das Reibrad einen veränderten Abstand zum Mittelpunkt der Scheibe 3 eingenommen, d. h. das Übersetzungsverhältnis des Getriebes ist geändert worden. Bei einer der in Abbildung 2 gezeigten Verstellung gegenläufigen Verstellung spielt sich der Vorgang in umgekehrter Weise ab, und der Abstand des Reibrades 2 vom Mittelpunkt der Scheibe 3 verringert sich.

Die einzigen Kräfte, die nicht tangential auf das Reibrad einwirken, dienen dazu, das Reibrad zu verschieben und sind damit nur abhängig von der Güte der Lagerung zwischen dem Reibrad 2 und der Profilwelle 1.

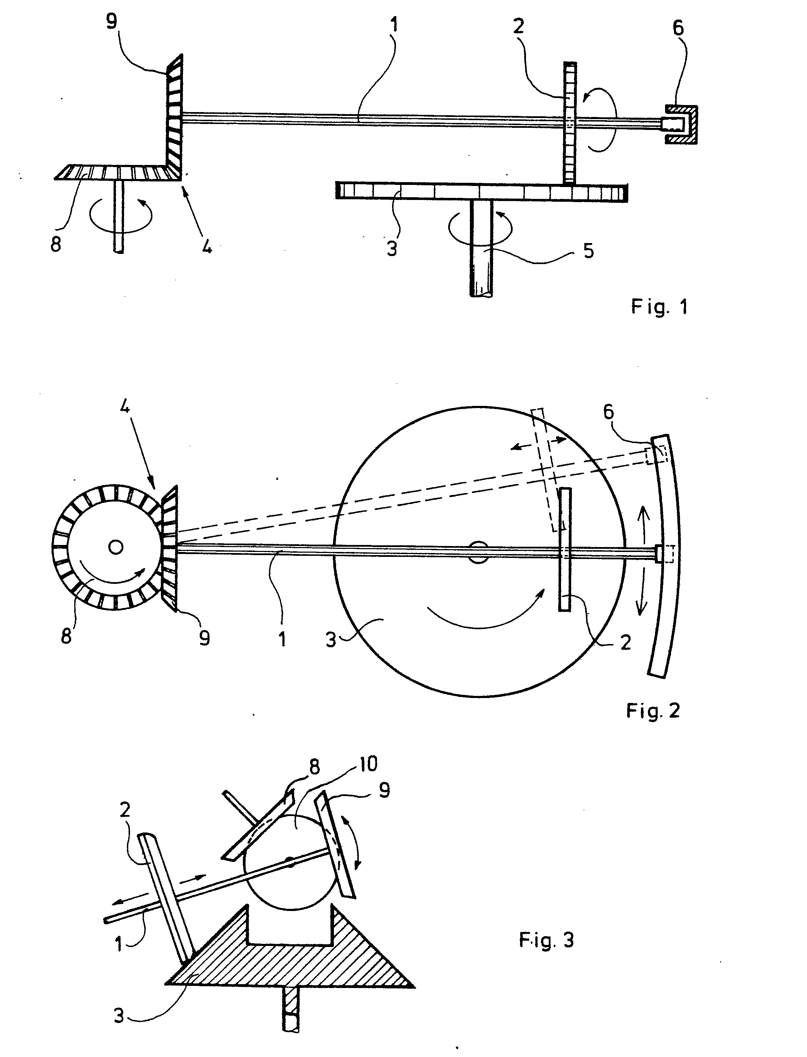

In Figur 3 ist eine Ausführungsform des Reibradgetriebes dargestellt, bei der das Reibrad 2 und die Scheibe 3 als Kegelräder ausgebildet sind. Bei dieser Ausführungsform wird eine besonders geringe Abnutzung des Reibrades und der Scheibe erzielt. Zur Kraftübertragung von dem Kegelrad 9 auf das Kegelrad 8 ist ein zusätzliches Zwischenrad 10 vorgesehen. Dadurch, daß sich die drei Achsen und die Verlängerung der Berührungsfläche zwischen dem Reibrad 2 und der Reibscheibe 3 in einem Punkt schneiden, tritt praktisch kein Zwangsschlupf auf. Dies gilt auch noch, wenn das Reibrad 2 eine gewisse Abnutzung erlitten hat. Die Ausführungsform gemäß Figur 3 erlaubt besonders kleine Abmessungen des gesamten Reibradgetriebes.

Für eine Anwendung des Getriebes als Kraftfahrzeugantriebsgetriebe kann die Scheibe 3 als Schwungscheibe ausgebildet sein, die beim Bremsen Energie aufnimmt und beim Beschleunigen abgibt. Für die Anwendung des Getriebes als Leistungsmeßgerät wird das an der Achse 1 auftretende Drehmoment gemessen. Dieses Drehmoment ist ein Maß für die übertragenen Drehmomente. Wird gleichzeitig eine Drehzahlmessung durchgeführt, so kann aus diesen Werten die übertragene Leistung abgeleitet werden.

Das erfindungsgemäße Reibradgetriebe ist zur Übertragung auch größerer Leistungen geeignet. Durch die freie Verschiebbarkeit des Reibrades auf einer Achse ergibt sich eine besonders geringe Abnutzung des Reibrades und der Scheibe. Es kann daher von einer hervorragenden Lösung der anstehenden Probleme gesprochen werden.

0021347

Patentansprüche:

1. Reibradgetriebe mit einem zur stufenlosen Änderung
des Übersetzungsverhältnisses auf einer Scheibe radial
verschiebbaren und aus einer zum Scheibenradius parallelen Achslage verschwenkbaren Reibrad, wobei die Scheibe und das Reibrad plan oder kegelig ausgebildet sein
können, dadurch gekennzeichnet, daß zur stufenlosen
Drehzahlregelung während des Betriebes (unter Last)
   - die Achse (1) des Reibrades (2) um einen Punkt
     außerhlab der im Mittelpunkt der Scheibe (3) errichteten Senkrechten verschwenkbar ist,
   - das Reibrad (2) auf seiner Achse (1) frei verschiebbar ist und
   - der Kraftfluß an der das Reibrad (2) tragenden
     Achse (1) in ihrem Schwenkpunkt über eine Gelenkverbindung (4) erfolgt.

2. Reibradgetriebe nach Anspruch 1, dadurch gekennzeichnet, daß bei festliegender Achse (5) der Scheibe (3)
die Achse (1) des Reibrades (2) um einen Punkt außerhalb der Scheibe (3) verschwenkbar ist.

3. Reibradgetriebe nach Anspruch 1, dadurch gekennzeichnet, daß zur Änderung des Übersetzungsverhältnisses
anstelle der Verschwenkung der das Reibrad (2) tragenden Achse (1) eine Verschiebung der Scheibe (3)
in der Scheibenebene erfolgt.

4. Reibradgetriebe nach Anspruch 1 bis 3, dadurch gekennzeichnet, daß die das Reibrad (2) tragende Achse (1)
eine Profilwelle ist.

5. Reibradgetriebe nach Anspruch 1 bis 4, dadurch gekennzeichnet, daß der Kraftfluß an der verschwenkbaren
Achse über ein Kegelradgetriebe (4) erfolgt.

0021347

6. Reibradgetriebe nach Anspruch 1 bis 4, dadurch gekennzeichnet, daß auf der verschwenkbaren Achse ein Stromgenerator angeordnet ist.

7. Reibradgetriebe nach Anspruch 1 bis 6, dadurch gekennzeichnet, daß die Scheibe (3) als Schwungrad ausgebildet ist.

8. Anwendung des Reibradgetriebes nach Anspruch 7, dadurch gekennzeichnet, daß es als Kraftfahrzeugantriebsgetriebe dient, wobei das Schwungrad beim Bremsen Energie aufnimmt und beim Beschleunigen abgibt.

9. Anwendung des Reibradgetriebes nach Anspruch 1 bis 7, dadurch gekennzeichnet, daß es als Leistungsmeßgerät dient, wobei das an der das Reibrad (2) tragenden Achse (1) auftretende Drehmoment als Maß für die übertragenen Drehmomente dient.

10. Reibradgetriebe nach Anspruch 1 bis 7, dadurch gekennzeichnet, daß das Verhältnis des Radius des Kegelrades (8) zum Radius des Kegelrades (9) gleich dem Verhältnis des Abstandes der Achse (5) und der Achse des Kegelrades (8) zum Radius des Reibrades (2) ist.

11. Anwendung des Reibradgetriebes nach Anspruch 10, dadurch gekennzeichnet, daß das zu übertragende Drehmoment durch Einstellung einer am Endpunkt der Welle (1) angreifenden Kraft eingestellt wird.

12. Anwendung des Reibradgetriebes nach Anspruch 1 bis 7, dadurch gekennzeichnet, daß es als Kraftfahrzeugantriebsgetriebe dient, wobei die Fahrgeschwindigkeit unabhängig von der Drehzahl des Motors durch das Übersetzungsverhältnis des Reibradgetriebes geregelt wird.

1/1

0021347

Fig. 1

Fig. 2

Fig. 3

0021347
Nummer der Anmeldung

**Europäisches Patentamt**

# EUROPÄISCHER RECHERCHENBERICHT

EP 80103420.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 606 414</u> (BARTHELEMY)<br>  * Abb.1; Seite 3, Zeilen 18 ff * | 1,2,4, 8,12 |
| | <u>DE - C - 389 425</u> (DE SANTIS)<br>  * Gesamt * | 1,2,4, 8,12 |
| | <u>CH - A - 235 221</u> (HOFER)<br>  * Fig. 1,2 * | 1,4,5 |
| | <u>US - A - 683 773</u> (KIGER)<br>  * Gesamt * | 1,3,4 |
| A | <u>DE - C - 333 541</u> (LORENZ AG) | 6 |
| A | <u>AT - B - 46 602</u> (DAIN) | 8,12 |
| T | <u>DE - C - 957 536</u> (HAMMANN)<br>  ----- | |

### KLASSIFIKATION DER ANMELDUNG (Int. Cl.³)

F 16 H 15/10//
B 60 K 17/08

### RECHERCHIERTE SACHGEBIETE (Int. Cl.³)

F 16 H 15/00
B 60 K 17/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 22-10-1980 | BAUMANN |

EPA form 1503.1   06.78